# EUROPÄISCHE PATENTANMELDUNG

(11) **EP 4 382 808 A1**
(43) Veröffentlichungstag der Anmeldung: **12.06.2024**
(21) Anmeldenummer: 23211358.9
(22) Anmeldetag: 22.11.2023
(51) Int. Cl.: F24C 7/08, A21B 3/02, F24C 15/02, A47J 36/00, A47L 15/00, H05B 6/64

(54) **ELEKTRISCHES GERÄT**

(30) Priorität: 07.12.2022 DE 102022132433; 08.12.2022 BE 202205997
(71) Anmelder: Miele & Cie. KG, 33332 Gütersloh (DE)
(72) Erfinder: Carsten, Daniel, 33615 Bielefeld (DE); Kohnert, Lars, 33659 Bielefeld (DE); Höcker, Jan, 49152 Bad Essen (DE)

(57) **Zusammenfassung**

Die Erfindung betrifft ein elektrisches Gerät mit
- einem Gehäuse (1) zur bestimmungsgemäßen Aufnahme eines Aufnahmeobjekts (7) in einem Gehäuseinneren (5),
- einer Öffnung zum Beladen des Gehäuseinneren (5) des Gehäuses (1) mit dem Aufnahmeobjekt (7),
- eines Verschlusselements (2) zum Verschließen der Öffnung,
- einem Time-of-flight-Sensor (3), der außerhalb des Gehäuseinneren (5) und oberhalb der Öffnung angeordnet ist und einen Sensorbereich aufweist, der einen Bereich um die Öffnung zumindest abschnittsweise abdeckt, so dass er ausgebildet ist, das Aufnahmeobjekt (7) zu sensieren, wenn es sich in dem Sensorbereich befindet, und
- einer Steuer- und/oder Regeleinrichtung, die eingerichtet und ausgebildet ist, einen motorbetriebenen Schließvorgang des Verschlusselements (2) in Abhängigkeit der von dem Time-of-flight-Sensor (3) empfangenen Sensordaten zu überwachen.

## Beschreibung

Die Erfindung betrifft ein elektrisches Gerät. Insbesondere betrifft die Erfindung ein elektrisches Gerät mit einem Gehäuse zur bestimmungsgemäßen Aufnahme eines Aufnahmeobjekts in einem Gehäuseinneren, einer Öffnung zum Beladen des Gehäuseinneren des Gehäuses mit dem Aufnahmeobjekt und einem Verschlusselement zum Verschließen der Öffnung.

Elektrische Geräte werden immer autonomer und stellen immer mehr Assistenzfunktionen für einen Nutzer bereit. So wird z.B. in vielen Haushalts-Heißgeräten eine komfortable, vollautomatische Verschlusselementschließung wie eine Türschließung bereitgestellt. Vollautomatische, motorisierte Verschlusselementschließungen bergen aber die Gefahr, dass sich Objekte nicht ordnungsgemäß im Verschlusselementbereich befinden können, wodurch beim Schließen des Verschlusselements Beschädigungen an dem Verschlusselement und/oder an dem eingeklemmten Objekt auftreten können. Bei diesem Objekt kann es sich um das Aufnahmeobjekt oder um ein Fremdobjekt wie beispielsweise eine menschliche Hand oder ein menschlicher Armabschnitt handeln. Dabei können Personen verletzt werden. Um Verletzungen und Beschädigungen bei der automatischen Verschlusselementschließung zu vermeiden, wird eine Verschlusselementschließüberwachung benötigt, die erkennt, wenn sich ein oder mehrere Objekte im Verschlusselementbereich befinden.

Bekannt ist eine Objekterkennung über eine Bilderkennung mittels einer hochauflösenden optischen Kamera, die Objekte im Verschlusselementbereich erkennen kann, sofern die Kamera auf diesen Bereich ausgerichtet ist. Die Kamera muss so eingebaut sein, dass sie den Verschlusselementbereich beobachten kann. Eine Kamera, die unterhalb des Verschlusselementöffnungsbereichs verbaut ist, um diesen zu erfassen, ist aus Kostengründen nicht wirtschaftlich. Zudem müssen bei der Verwendung einer Kamera sehr viele Bilddateien für das Training eines Erkennungsalgorithmus vorhanden sein. Ferner ist ein Einbauraumbedarf einer Kamera relativ groß. Dies ist ein bekanntes Problem z.B. bei der Garraumkamera zur Erkennung von Gargut in einem Heißgerät und bei der Erkennung und Unterscheidung von Backblechen, Grillrosten und/oder Gargutbehältern als Aufnahmeobjekte des Heißgeräts.

Weiterhin sind Lichtschrankentechnologien bekannt, die im Bereich der Verschlusselementöffnung erkennen können, ob ein oder mehrere Objekte die Öffnung passieren oder sich in diesem Bereich aufhalten. Die Lichtschrankensensorik erkennt lediglich, ob ein Objekt im Bereich der Lichtschranke vorhanden ist. Das Objekt muss daher genau im Bereich der Lichtschranke liegen, um den Messweg zu unterbrechen. Es lässt sich nur ein eingeschränkter Informationsgehalt über den Bereich um die Lichtschranke herum gewinnen. Auch ist der offen im Raum liegende Schwenkbereich eines klappenartigen Verschlusselements nur sehr schwer von einer Lichtschranke zu überwachen.

Der Erfindung stellt sich somit das Problem, ein elektrisches Gerät bereitzustellen, das eine einfach zu verbauende, relativ kostengünstige und möglichst eindeutige Objekterkennung zur Überwachung einer automatischen Schließung des Verschlusselements bereitstellt.

Erfindungsgemäß wird dieses Problem durch ein elektrisches Gerät mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben der Verwendung einer Time-of-Flight Sensorik darin, dass diese im Vergleich zu einer Kamera kostengünstiger ist und weniger Bauraum benötigt. Die Auswertung von Time-of-Flight-Sensorsignalen verläuft in der Regel analytisch und bedarf geringerer Rechenleistung als bei der optischen Mustererkennung von Kameradaten. Die Distanzmessung zeigt die vertikale Position des detektierten Aufnahmeobjektes zwischen Unter- und Oberkante der Öffnung an. Dies dient zudem auch als Einschubhöhenerkennung. Die Time-of-Flight Sensorik in der hier vorgeschlagenen Einbauposition bietet demnach Informationen, die eine Kamera nicht bieten kann. Daher werden insbesondere folgende Vorteile realisiert: Die Einbauposition des Sensors mit vergleichsweise wenig Bauraum und niedrigeren Anforderungen an die Robustheit der Sensorik in Bezug auf Temperaturen und Feuchtigkeit ist für den Time-of-flight-Sensor gut geeignet. Ein hoher Informationsgehalt an Tiefeninformationen wird durch das Time-of-Flight Messprinzip des Sensors bereitgestellt. Ein Aufnahmeobjekt kann auch erkannt werden, wenn sich ein weiteres Aufnahmeobjekt bereits im Gehäuseinneren befindet. Der Time-of-Flight-Sensor ist im Vergleich zu konventionellen hochauflösenden Kameras kostengünstiger.

Die Erfindung betrifft ein elektrisches Gerät mit
- einem Gehäuse zur bestimmungsgemäßen Aufnahme eines Aufnahmeobjekts in einem Gehäuseinneren,
- einer Öffnung zum Beladen des Gehäuseinneren des Gehäuses mit dem Aufnahmeobjekt,
- einem Verschlusselement zum Verschließen der Öffnung,
- einem Time-of-flight-Sensor, der außerhalb des Gehäuseinneren und oberhalb der Öffnung angeordnet ist und einen Sensorbereich aufweist, der einen Bereich um die Öffnung zumindest abschnittsweise abdeckt, so dass er ausgebildet ist, das Aufnahmeobjekt zu sensieren, wenn es sich in dem Sensorbereich befindet, und
- einer Steuer- und/oder Regeleinrichtung, die eingerichtet und ausgebildet ist, einen motorbetriebenen Schließvorgang des Verschlusselements in Abhängigkeit der von dem Time-of-flight-Sensor empfangenen Sensordaten zu überwachen.

Es wird ein Time-of-Flight Sensor verwendet, der bevorzugt unterhalb einer Blende des Geräts, aber außerhalb des Gehäuseinneren in das elektrische Gerät eingebaut ist. Die Steuer- und/oder Regeleinrichtung weiß durch die Überwachung beim Auslösen der vollautomatischen und motorisierten Verschlusselementschließung, ob sich das Aufnahmeobjekt in einem Bereich der Verschlusselementöffnung befindet oder nicht und kann dadurch entscheiden, den Verschlusselementschließprozess durchzuführen oder abzuwarten. Die Steuer- und/oder Regeleinrichtung kann in den Time-of-flight-Sensor integriert sein. Der Time-of-flight-Sensor kann an eine Blendenelektronik, die von der Blende vor einem Nutzer abgedeckt ist, positioniert und elektrisch angeschlossen sein.

In einer bevorzugten Ausführungsform weist der Sensorbereich einen vorbestimmten Bereich einer Verschlusselementinnenseite und einen vorbestimmten Bereich des Gehäuseinneren auf, so dass der Time-of-flight-Sensor ausgebildet ist, das Aufnahmeobjekt zu sensieren, wenn es sich in dem vorbestimmten Bereich der Verschlusselementinnenseite und dem vorbestimmten Bereich des Gehäuseinneren befindet, wobei der Sensorbereich eine gesamte Breite der Öffnung abdeckt. Positions- und Richtungsangaben beziehen sich auf eine betriebsgemäße Aufstellposition des elektrischen Geräts. Ein vollständig in das Gehäuseinnere eingeschobenes Aufnahmeobjekt lässt sich eindeutig erkennen, und ein noch herausstehendes Aufnahmeobjekt ist über die Detektionszone der Verschlusselementinnenseite als ein Außenbereich in Bezug auf das Gehäuses erkennbar.

Bevorzugt weist der Sensorbereich verschiedene Zonen auf und der Time-of-flight-Sensor ist ausgebildet, zwischen den verschiedenen Zonen zu unterscheiden. Je größer die Anzahl der Zonen bzw. der Messbereiche des Time-of-flight-Sensors ist, desto genauer kann auf eine Bewegung geschlossen werden. Beispielsweise kann detektiert werden von welcher Seite ein Aufnahmeobjekt in den Sensorbereich eintritt. Bei der Unterscheidung zwischen Gehäuseinneren und der Verschlusselementinnenseite als verschiedene Zonen kann die laterale Position des Aufnahmeobjektes bestimmt werden. Dadurch ist es möglich, das Aufnahmeobjekt zu erkennen, das gerade in das Gehäuseinnere eingeschoben wird. Die Einschubebene lässt sich über die Distanzmessung des Time-of-Flight Messprinzips beim Einschieben bestimmen.

In einer bevorzugten Ausführungsform weist der Time-of-flight-Sensor eine 0°-Ausrichtung auf. In der 0°-Ausrichtung blickt der Time-of-flight-Sensor bevorzugt direkt nach unten auf einen das Gehäuseinnere begrenzenden Boden und auch auf die Verschlusselementinnenseite, insbesondere, wenn das Verschlusselement ganz oder teilweise geöffnet ist.

Bevorzugt ist der Time-of-flight-Sensor ausgebildet, eine Höhe des Aufnahmeobjekts über der Verschlusselementinnenseite und laterale Abmessungen des Aufnahmeobjekts zu messen. Daraus kann das Aufnahmeobjekt bestimmt und von einem Fremdobjekt unterschieden werden. Je höher die Anzahl der Zonen, desto besser ist die Möglichkeit die lateral aufgelösten Tiefeninformationen bei Einschub eines Aufnahmeobjekts für eine Volumenbestimmung des Aufnahmeobjekts zu verwenden. Wenn das Aufnahmeobjekt Gargut aufweist, kann aus dem bestimmten Gargut-Volumen eine verbesserte Verfahrenstechnik beim Garen des Garguts bereitgestellt werden.

In einer bevorzugten Ausführungsform weist das elektrische Gerät weiterhin eine Anzeige- und/oder Ausgabeeinrichtung auf. Die Steuer- und/oder Regeleinrichtung ist bevorzugt eingerichtet und ausgebildet, die Anzeige- und/oder Ausgabeeinrichtung derart zu steuern und/oder zu regeln, dass sie bei Detektion eines anderen Fremdobjekts als dem Aufnahmeobjekt in dem Sensorbereich ein Warnsignal anzeigt und/oder ausgibt. Beispielsweise wird ein erkanntes Fremdobjekt in dem Verschlusselementbereich in einem Display des elektrischen Geräts als Warnung angezeigt, so dass der Nutzer erkennen kann, warum die Verschlusselementschließung nicht ausgeführt wird. Die beschriebene Verschlusselementschließüberwachung kann neben der Erkennung des Aufnahmeobjekts auch erkennen, ob Fremdobjekte wie Hände von Personen während des Verschlusselementschließvorganges zwischen dem Verschlusselement und dem Gehäuse vorhanden sind. So kann der Verschlusselementschließvorgang rechtzeitig abgebrochen werden, bevor es zu möglichen Verletzungen kommen kann. Während der Verschlusselementschließung muss der Bereich zwischen dem Verschlusselement und dem Gehäuse frei sein, um Gefährdungen auszuschließen.

In einer bevorzugten Ausführungsform steuert und/oder regelt die Steuer- und/oder Regeleinrichtung den Time-of-flight-Sensor derart, dass dieser während des motorgetriebenen Schließvorgangs des Verschlusselementes aktiviert ist. Während der restlichen Zeit kann der Time-of-flight-Sensor unabhängig vom Zustand des elektrischen Geräts aktiviert oder inaktiviert sein. Wenn der Time-of-flight-Sensor im betriebsbereiten Zustand des elektrischen Geräts aktiviert ist, kann die Steuer- und/oder Regeleinrichtung weiterhin eingerichtet und ausgebildet sein, den motorbetriebenen Schließvorgang des Verschlusselements in Abhängigkeit der von dem Time-of-flight-Sensor empfangenen Sensordaten zu initiieren.

Bevorzugt ist die Steuer- und/oder Regeleinrichtung eingerichtet und ausgebildet, vom Time-of-flight-Sensor während des motorgetriebenen Schließvorgangs empfangene Sensordaten mit hinterlegten Referenzdaten zu vergleichen und den Schließvorgang zu stoppen, wenn die von dem Time-of-flight-Sensor während des Schließvorgangs empfangenen Sensordaten von den hinterlegten Referenzdaten abweichen. Ein typischer, zeitlicher Verlauf der Sensorinformationen während der Verschlusselementschließung kann aufgenommen werden und als Basis für Referenzdaten dienen. Sollten sich während des Schließvorganges signifikante Abweichungen von der Referenzkurven ergeben, weist dies auf ein Aufnahmeobjekt oder Fremdobjekt in dem Verschlusselementbereich hin, welches zur Zeit der Verschlusselementschließung plötzlich hereingekommen ist.

In einer bevorzugten Ausführungsform ist die Steuer- und/oder Regeleinrichtung eingerichtet und ausgebildet, ein Volumen eines in das Gehäuseinnere eingebrachten Aufnahmeobjekts und/oder Fremdobjektes anhand der empfangenen Sensordaten zu ermitteln. Dadurch kann z.B. bei Gargut ein optimiertes Verfahren zur Durchführung eines Garvorgangs ausgeführt werden.

Bevorzugt ist das elektrische Gerät ein Heißgerät, bevorzugt ein Backofen, ein Dampfgarer, ein Pizzaofen und/oder eine Mikrowelle oder ein Kombinationsgerät derartiger Funktionalitäten. Das Aufnahmeobjekt ist bevorzugt ein Backblech, ein Grillrost oder ein Gargutbehälter. Das Verschlusselement ist bevorzugt eine Tür bevorzugter eine Klapptür.

Ein Ausführungsbeispiel der Erfindung ist in den Zeichnungen rein schematisch dargestellt und wird nachfolgend näher beschrieben. Es zeigt schematisch und nicht maßstabsgerecht
- Fig. 1: eine Draufsicht auf eine Frontseite eines erfindungsgemäßen elektrischen Geräts;
- Fig. 2: eine Draufsicht auf eine Frontseite des in Fig. 1 gezeigten elektrischen Geräts mit teilweise eingebrachten Aufnahmeobjekt;
- Fig. 3: eine Draufsicht auf eine Frontseite des in Fig. 1 gezeigten elektrischen Geräts mit vollständig eingebrachtem Aufnahmeobjekt; und
- Fig. 4: eine Seitenansicht des in Fig. 1 gezeigten elektrischen Geräts.

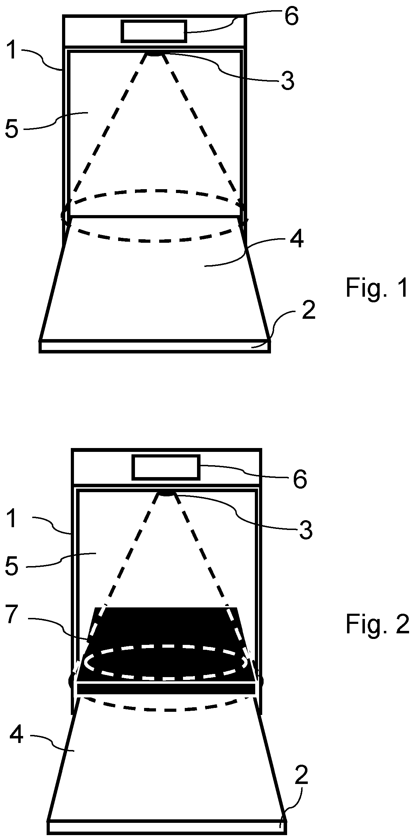

Fig. 1 zeigt eine Draufsicht auf eine Frontseite eines erfindungsgemäßen elektrischen Geräts. Das elektrische Gerät weist auf: ein Gehäuse 1 zur bestimmungsgemäßen Aufnahme eines Aufnahmeobjekts (nicht gezeigt) in einem Gehäuseinneren 5, eine Öffnung zum Beladen des Gehäuseinneren 5 mit dem Aufnahmeobjekt und ein Verschlusselement 2 in Form einer Tür zum Verschließen der Öffnung. Das elektrische Gerät weist ferner eine Blende 6 und einen Time-of-flight-Sensor 3 auf, der außerhalb des Gehäuseinneren 5, oberhalb der Öffnung und unterhalb der Blende 6 angeordnet ist. Der Time-of-flight-Sensor 3 weist einen Sensorbereich auf, der einen Bereich um die Öffnung zumindest abschnittsweise abdeckt, so dass er ausgebildet ist, das Aufnahmeobjekt zu sensieren, wenn es sich in dem Sensorbereich befindet. Der Sensorbereich ist in gestrichelter Darstellung visualisiert. Das Verschlusselement 2 ist aufgeklappt, so dass die Öffnung zum Beladen des Gehäuseinneren 5 freiliegt. Das elektrische Gerät weist eine Steuer- und/oder Regeleinrichtung auf, die eingerichtet und ausgebildet ist, einen motorbetriebenen Schließvorgang des Verschlusselements 2 in Abhängigkeit der von dem Time-of-flight-Sensor 3 empfangenen Sensordaten zu überwachen.

Fig. 2 zeigt eine Draufsicht auf eine Frontseite des in Fig. 1 gezeigten elektrischen Geräts mit teilweise eingebrachten Aufnahmeobjekt 7. Das Aufnahmeobjekt 7 ist schwarz gezeigt. Ein Teil des Aufnahmeobjekts 7 befindet sich im Gehäuseinneren 5, während sich ein weiterer Teil oberhalb der Verschlusselementinnenseite 4 befindet. Der in gestrichelter Darstellung visualisierte Sensorbereich weist einen vorbestimmten Bereich der Verschlusselementinnenseite 4 und einen vorbestimmten Bereich des Gehäuseinneren 5 auf, so dass der Time-of-flight-Sensor 3 ausgebildet ist, das Aufnahmeobjekt 7 zu sensieren, wenn es sich in dem vorbestimmten Bereich der Verschlusselementinnenseite 4 und dem vorbestimmten Bereich des Gehäuseinneren 5 befindet, wobei der Sensorbereich eine gesamte Breite der Öffnung abdeckt, bezogen auf eine betriebsgemäße Aufstellposition des elektrischen Geräts.

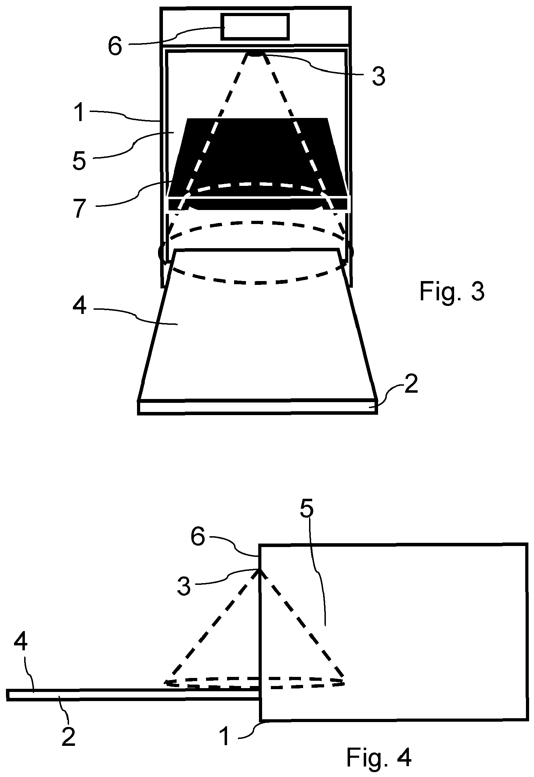

Fig. 3 zeigt eine Draufsicht auf eine Frontseite des in Fig. 1 gezeigte elektrische Gerät mit vollständig eingebrachtem Aufnahmeobjekt 7. Das Ausnahmeobjekt 7 befindet sich nun vollständig im Gehäuseinneren 5. Der Sensorbereich weist verschiedene Zonen (nicht gezeigt) auf. Der Time-of-flight-Sensor 3 ist ausgebildet, zwischen den verschiedenen Zonen zu unterscheiden, so dass er sensieren kann, dass das Aufnahmeobjekt sich vollständig im Gehäuseinneren 5 befindet. Es befinden sich keine Fremdobjekte (nicht gezeigt) wie z.B. Körperteile eines Nutzers in dem Sensorbereich. Daher kann motorbetriebener Schließvorgang des Verschlusselements 2 initiiert und von dem Time-of-flight-Sensor 3 überwacht werden.

Fig. 4 zeigt eine Seitenansicht des in Fig. 1 gezeigten elektrischen Geräts. Der in gestrichelter Darstellung visualisierte Sensorbereich weist einen vorbestimmten Bereich der Verschlusselementinnenseite 4 und einen vorbestimmten Bereich des Gehäuseinneren 5 auf, so dass der Time-of-flight-Sensor 3 ausgebildet ist, das Aufnahmeobjekt 7 zu sensieren, wenn es sich in dem vorbestimmten Bereich der Verschlusselementinnenseite 4 und dem vorbestimmten Bereich des Gehäuseinneren 5 befindet. Der Time-of-flight-Sensor 3 weist eine 0°-Ausrichtung auf und blickt daher senkrecht nach unten.

### Bezugszeichenliste

- 1: Gehäuse
- 2: Verschlusselement
- 3: Time-of-flight-Sensor
- 4: Verschlusselementinnenseite
- 5: Gehäuseinneres
- 6: Blende
- 7: Objekt

## Patentansprüche

1. Elektrisches Gerät mit
- einem Gehäuse (1) zur bestimmungsgemäßen Aufnahme eines Aufnahmeobjekts (7) in einem Gehäuseinneren (5),
- einer Öffnung zum Beladen des Gehäuseinneren (5) des Gehäuses (1) mit dem Aufnahmeobjekt (7),
- einem Verschlusselement (2) zum Verschließen der Öffnung,
- einem Time-of-flight-Sensor (3), der außerhalb des Gehäuseinneren (5) und oberhalb der Öffnung angeordnet ist und einen Sensorbereich aufweist, der einen Bereich um die Öffnung zumindest abschnittsweise abdeckt, so dass er ausgebildet ist, das Aufnahmeobjekt (7) zu sensieren, wenn es sich in dem Sensorbereich befindet, und
- einer Steuer- und/oder Regeleinrichtung, die eingerichtet und ausgebildet ist, einen motorbetriebenen Schließvorgang des Verschlusselements (2) in Abhängigkeit der von dem Time-of-flight-Sensor (3) empfangenen Sensordaten zu überwachen.

2. Elektrisches Gerät nach Anspruch 1, **dadurch gekennzeichnet, dass** der Sensorbereich einen vorbestimmten Bereich einer Verschlusselementinnenseite (4) und einen vorbestimmten Bereich des Gehäuseinneren (5) aufweist, so dass der Time-of-flight-Sensor (3) ausgebildet ist, das Aufnahmeobjekt (7) zu sensieren, wenn es sich in dem vorbestimmten Bereich der Verschlusselementinnenseite (4) und dem vorbestimmten Bereich des Gehäuseinneren (5) befindet, wobei der Sensorbereich eine gesamte Breite der Öffnung abdeckt, bezogen auf eine betriebsgemäße Aufstellposition des elektrischen Geräts.

3. Elektrisches Gerät nach Anspruch 1 oder 2, **dadurch gekennzeichnet, dass** der Sensorbereich verschiedene Zonen aufweist und der Time-of-flight-Sensor (3) ausgebildet ist, zwischen den verschiedenen Zonen zu unterscheiden.

4. Elektrisches Gerät nach einem der vorangehenden Ansprüche, **dadurch gekennzeichnet, dass** der Time-of-flight-Sensor (3) eine 0°-Ausrichtung aufweist.

5. Elektrisches Gerät nach einem der vorangehenden Ansprüche, **dadurch gekennzeichnet, dass** der Time-of-flight-Sensor (3) ausgebildet ist, eine Höhe des Aufnahmeobjekts (7) über der Verschlusselementinnenseite (4) und laterale Abmessungen des Aufnahmeobjekts (7) zu messen.

6. Elektrisches Gerät nach einem der vorangehenden Ansprüche, **gekennzeichnet durch** eine Anzeige- und/oder Ausgabeeinrichtung.

7. Elektrisches Gerät nach einem der vorangehenden Ansprüche, **dadurch gekennzeichnet, dass** die Steuer- und/oder Regeleinrichtung den Time-of-flight-Sensor (3) derart steuert und/ oder regelt, dass dieser während des motorgetriebenen Schließvorgangs des Verschlusselementes (2) aktiviert ist.

8. Elektrisches Gerät nach Anspruch 7, **dadurch gekennzeichnet, dass** die Steuer- und/oder Regeleinrichtung eingerichtet und ausgebildet ist, vom Time-of-flight-Sensor (3) während des motorgetriebenen Schließvorgangs empfangene Sensordaten mit hinterlegten Referenzdaten zu vergleichen und den Schließvorgang zu stoppen, wenn die von dem Time-of-flight-Sensor (3) während des Schließvorgangs empfangenen Sensordaten von den hinterlegten Referenzdaten abweichen.

9. Elektrisches Gerät nach einem der vorangehenden Ansprüche, **dadurch gekennzeichnet, dass** die Steuer- und/oder Regeleinrichtung eingerichtet und ausgebildet ist, ein Volumen eines in das Gehäuseinnere (5) eingebrachten Aufnahmeobjekts (7) und/oder Fremdobjektes anhand der empfangenen Sensordaten zu ermitteln.

10. Elektrisches Gerät nach einem der vorangehenden Ansprüche, **dadurch gekennzeichnet, dass** es ein Heißgerät, bevorzugt ein Backofen, ein Dampfgarer, ein Pizzaofen und/oder eine Mikrowelle oder ein Kombinationsgerät derartiger Funktionalitäten ist.
